(19) Europäisches Patentamt
European Patent Office
Office européen des brevets

(11) Publication number : 0 369 528 B1

(12) EUROPEAN PATENT SPECIFICATION

(45) Date of publication of patent specification : 02.01.92 Bulletin 92/01

(51) Int. Cl.$^5$ : B01J 31/18, C08G 67/02

(21) Application number : 89202831.7

(22) Date of filing : 07.11.89

(54) **Catalyst compositions.**

(30) Priority : 11.11.88 NL 8802772

(43) Date of publication of application : 23.05.90 Bulletin 90/21

(45) Publication of the grant of the patent : 02.01.92 Bulletin 92/01

(84) Designated Contracting States : AT BE CH DE ES FR GB IT LI NL SE

(56) References cited :
EP-A- 0 171 802
FR-A- 2 236 856
FR-A- 2 329 648

(73) Proprietor : SHELL INTERNATIONALE RESEARCH MAATSCHAPPIJ B.V.
Carel van Bylandtlaan 30
NL-2596 HR Den Haag (NL)

(72) Inventor : Van Doorn, Johannes Adrianus
Badhuisweg 3
NL-1031 CM Amsterdam (NL)
Inventor : Drent, Eit
Badhuisweg 3
NL-1031 CM Amsterdam (NL)
Inventor : Gerards, Leonard Egbert Henri
Badhuisweg 3
NL-1031 CM Amsterdam (NL)

(74) Representative : Tuijn, Jan Warnaar et al
Shell Internationale Research Maatschappij B.V., Patents, Licensing & Trade Marks Division, P.O. Box 302
NL-2501 CH The Hague (NL)



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to novel compositions which can be suitably used in the preparation of polymers of carbon monoxide with one or more olefinically unsaturated compounds.

Linear polymers of carbon monoxide with one or more olefinically unsaturated compounds, in which the units originating in carbon monoxide on the one hand, and the units originating in the applied olefinically unsaturated compounds on the other hand, occur in alternating order, can be prepared by contacting the monomers at an elevated temperature and pressure with a catalyst composition comprising a Group VIII metal and a diphosphine of the general formula $R^1R^2P\text{-}R\text{-}PR^3R^4$, wherein $R^1$, $R^2$, $R^3$ and $R^4$ are the same or different, optionally polar-substituted, hydrocarbyl groups and R represents a bivalent bridging group containing at least two carbon atoms in the bridge.

The polymers described hereinbefore have excellent mechanical properties, notably very good mechanical strength, stiffness and impact resistance. A disadvantage of the diphosphine-containing catalyst compositions is their high sensitivity to oxidation. In the presence of air, the diphosphines rapidly convert into diphosphine oxides which causes the composition to loose its catalytic activity. Since, as a rule, the afore-mentioned catalyst compositions are very active, only small amounts are needed in the polymerization. As a consequence, mere traces of air are sufficient to cause catalyst deactivation. Air should therefore be carefully excluded during transport, storage and application of these catalyst compositions.

The Applicant has carried out an investigation aimed at finding catalyst compositions which can be used like the afore-mentioned diphosphine-containing catalyst compositions to prepare linear alternating polymers from mixtures of carbon monoxide and one or more olefinically unsaturated compounds, but which are more capable of withstanding oxidation than the diphosphine-containing compositions. The research has produced a group of catalyst compositions which meet the two requirements mentioned hereinbefore. The pertinent catalyst compositions which retain their full activity in the presence of oxygen comprise a Group VIII metal and a compound of the general formula I

$$R^1R^2\overset{\overset{X^1}{\|}}{P}-Y-\overset{\overset{X^2}{\|}}{P}R^3R^4 \qquad (I)$$

wherein $X^1$ and $X^2$ are the same or different elements chosen from sulphur and selenium, Y is a bivalent bridging group containing at least one carbon or nitrogen atom in the bridge and $R^1$, $R^2$, $R^3$ and $R^4$ have the meanings given hereinbefore. Catalyst compositions which comprise a Group VIII metal and a compound of the general formula I are novel.

The present patent application therefore relates to novel catalyst compositions which comprise a Group VIII metal and a compound of the general formula I wherein $X^1$ and $X^2$ are the same or different elements chosen from sulphur and selenium, Y is a bivalent bridging group containing at least one carbon or nitrogen atom in the bridge and $R^1$, $R^2$, $R^3$ and $R^4$ are the same or different, optionally polar-substituted, hydrocarbyl groups.

The patent application further relates to the use of these catalyst compositions in the preparation of polymers of carbon monoxide with one or more olefinically unsaturated compounds.

In the present patent application, Group VIII metals should be taken to be the noble metals ruthenium, rhodium, palladium, osmium, iridium and platinum, and the iron group metals iron, cobalt and nickel.

In the catalyst compositions of the invention, the preferred Group VIII metal is chosen from palladium, nickel and cobalt. Special preference is given to palladium as Group VIII metal. By preference, the Group VIII metal is taken up in the catalyst composition in the form of a salt of a carboxylic acid, in particular in the form of an acetate. In addition to a Group VIII metal and a compound of the general formula I, the catalyst compositions of the invention preferably include an anion of an acid with a pKa of less than 4 (determined in aqueous solution at 18°C) and in particular an anion of an acid with a pKa of less than 2. Examples of acids with a pKa of less than 2 are sulphuric acid, perchloric acid, sulphonic acids, such as methanesulphonic acid, trifluoromethanesulphonic acid and para-toluenesulphonic acid, and halogen carboxylic acids, such as trichloroacetic acid, difluoroacetic acid and trifluoroacetic acid. Preference is given to a sulphonic acid, such as paratoluenesulphonic acid or a halogen carboxylic acid, such as trifluoro acetic acid. The anion of an acid with a pKa of less than 4 may be taken up in the catalyst composition in the form of an acid and/or in the form of a salt, such as a cupric salt. Preferably, the anion is present in the catalyst compositions in a quantity of 1-1000 and in particular of 2-100 equivalents per mol of Group VIII metal. The anions of acids with a pKa of less than 4 may be present in the catalyst compositions of the invention either because they were added as separate components, or

because a palladium compound such as palladium trifluoroacetate or palladium para-tosylate was used, or because a compound of the general formula I was used wherein Y, $R^1$, $R^2$, $R^3$ and/or $R^4$ contained one or more carboxylic acid groups or sulphonic acid groups.

In addition to a Group VIII metal, a compound of the general formula I and, optionally, an anion of an acid with a pKa of less than 4, the catalyst compositions of the invention preferably also include an organic oxidant. Examples of suitable organic oxidants are 1,2- and 1,4-quinones, aliphatic nitrites, such as butyl nitrite and aromatic nitro compounds, such as nitro-benzene and 2,4-dinitro-toluene. Preference is given to 1,4-benzoquinone and 1,4-naphthoquinone. The quantity of organic oxidant used preferably amounts to 1-10000 and in particular to 10-5000 mol per mol of Group VIII metal.

In the catalyst compositions of the invention, the compound of the general formula I is preferably present in a quantity of 1-1000, in particular 2-100 mol per mol of group VIII metal. In the compounds of the general formula 1, $X^1$ and $X^2$ are the same or different elements chosen from sulphur and selenium. In the catalyst compositions of the invention, preference is given to the use of compounds of the general formula I wherein $X^1$ and $X^2$ are the same and in particular to such compounds wherein $X^1$ and $X^2$ represent sulphur. In the compounds of the general formula I, $R^1$, $R^2$, $R^3$ and $R^4$ are the same or different, optionally polar-substituted, hydrocarbyl groups. In the catalyst compositions of the invention, preference is given to the use of compounds of the general formula I, wherein $R^1$, $R^2$, $R^3$ and $R^4$ are the same and in particular to such compounds wherein $R^1$, $R^2$, $R^3$ and $R^4$ represent phenyl groups.

In the compounds of the general formula I Y is a bivalent bridging group. In distinction to the diphosphines mentioned earlier, in which the bivalent bridging group R which connects the two phosphorus atoms should contain at least two carbon atoms in the bridge, the compounds of the general formula I when used as catalyst components, may suitably also be compounds containing only a single carbon atom in the bridge, as well as compounds containing only a single nitrogen atom in the bridge. Examples of compounds in which the bridging group Y contains only a single carbon atom in the bridge, are bis(diphenyl-phosphino)methane disulphide, bis(diphenyl-phosphino)methane diselenide, and 2,2-bis(diphenyl-phosphino)propane disulphide.

An example of a compound in which the bridging group Y contains only a single nitrogen atom in the bridge is tetraphenyldiphosphazane disulphide.

Preference is given to compounds in which the bridging group Y contains at least two carbon atoms in the bridge and in particular to compounds in which the bridging group Y contains three atoms in the bridge at least two of which are carbon atoms. An example of a compound in which the bridging group Y contains two carbon atoms in the bridge is 1,2-bis(diphenyl-phosphino)ethane disulphide. An example of a compound in which the bridging group Y contains four carbon atoms in the bridge two of which are members of a heterocyclic ring, is 2,2-dimethyl-4,5-bis(diphenylphosphino-methyl)-1,3-dioxacyclopentane disulphide. As examples of compounds in which the bridging group Y contains three atoms in the bridge at least two of which are carbon atoms, may be mentioned 2,2-dimethyl-1,3-bis(diphenyl-phosphino)propane disulphide, 2,2-dimethyl-1,3-bis(diphenyl-phosphino)-2-silapropane disulphide, and 2-methyl-2-(diphenyl-phosphino-methyl)-1,3-bis(diphenyl-phosphino)propane trisulphide.

The polymerization using the catalyst compositions of the invention is preferably carried out by contacting the monomers with a solution of the catalyst composition in a diluent in which the polymers are insoluble or virtually insoluble. Very suitable diluents are lower alcohols such as methanol. The polymerization may also be carried out in the gaseous phase, if desired. Eligible olefinically unsaturated compounds which can be polymerized with carbon monoxide by using the catalyst compositions of the invention are compounds which consist exclusively of carbon and hydrogen as well as compounds which, in addition to carbon and hydrogen, contain one or more hetero atoms. The catalyst compositions of the invention are preferably applied for preparing polymers of carbon monoxide with one or more olefinically unsaturated hydrocarbons. Examples of suitable hydrocarbon monomers are ethene and other α-olefins, such as propene, butene-1, hexene-1 and octene-1. The catalyst compositions of the invention are in particular very suitable for application in the preparation of copolymers of carbon monoxide with ethene and in the preparation of terpolymers of carbon monoxide with ethene and another olefinically unsaturated hydrocarbon, in particular propene.

The quantity of catalyst composition employed in the preparation of the polymers may vary within wide limits. The quantity of catalyst used per mol of olefinically unsaturated compound to be polymerized preferably contains $10^{-7}$-$10^{-3}$ and in particular $10^{-6}$-$10^{-4}$ mol of Group VIII metal.

The preparation of the polymers is preferably carried out at a temperature of 25-150°C and a pressure of 2-150 bar and in particular at a temperature of 30-130°C and a pressure of 5-100 bar. The molar ratio of olefinically unsaturated compounds relative to carbon monoxide in the mixture to be polymerized is preferably 10: 1-1 : 10 and in particular 5 : 1-1 : 5.

The invention will now be illustrated with the aid of the following examples.

Example 1

A carbon monoxide/ethene copolymer was prepared as follows. A stirred autoclave with a capacity of 250 ml was charged with a catalyst solution comprising
50 ml methanol,
0.1 mmol palladium acetate,
0.3 mmol para-toluenesulphonic acid,
2 mmol bis(diphenyl-phosphino)methane disulphide, and
20 mmol 1,4-benzoquinone.

After any air present in the autoclave had been removed by evacuation, 20 bar ethene was blown in, followed by 30 bar carbon monoxide. Then, the contents of the autoclave were brought to a temperature of 80°C. Polymerization was terminated after 2.5 hours, by cooling to room temperature and releasing the pressure. The polymer was filtered off, washed with methanol and dried in vacuo at room temperature.

2.3 g of copolymer was obtained.

Example 2

A carbon monoxide/ethene copolymer was prepared substantially in the same way as the copolymer of Example 1, except for the following differences

a) the catalyst solution comprised 1 mmol of 1,2-bis(diphenyl-phosphino)ethane disulphide instead of bis(diphenyl-phosphino)methane disulphide, and
b) the reaction time was 5 hours instead of 2.5 hours.

2.5 g copolymer was obtained.

Example 3

A carbon monoxide/ethene copolymer was prepared substantially in the same way as the copolymer of Example 1, except for the following differences

a) the catalyst solution comprised 1 mmol of 2-methyl-2-(diphenyl-phosphino-methyl)-1,3-bis(diphenyl-phosphino)propane trisulphide instead of bis(diphenyl-phosphino)methane disulphide, and
b) the reaction time was 5 hours instead of 2.5 hours.

7.2 g of copolymer was obtained.

Example 4

A carbon monoxide/ethene copolymer was prepared substantially in the same way as the copolymer of Example 1, except for the following differences

a) the catalyst solution comprised 0.5 mmol of 2,2-dimethyl-1,3-bis(diphenyl-phosphino)propane disulphide instead of bis(diphenyl-phosphino)methane disulphide,
b) the reaction temperature was 60°C instead of 80°C, and
c) the reaction time was 5 hours instead of 2.5 hours.

12.2 g of copolymer was obtained.

Example 5

A carbon monoxide/ethene copolymer was prepared substantially in the same way as the copolymer of Example 1, except for the following differences

a) the catalyst solution comprised 0.5 mmol of 2,2-bis(diphenyl-phosphino)propane disulphide instead of bis(diphenyl-phosphino)methane disulphide, and
b) the reaction time was 5 hours instead of 2.5 hours.

4.8 g of copolymer was obtained.

Example 6

A carbon monoxide/ethene copolymer was prepared substantially in the same way as the copolymer of Example 1, except for the following differences

a) the catalyst solution comprised 0.5 mmol of 2,2-dimethyl-4,5-bis(diphenyl-phosphino-methyl)-1,3-dioxacyclopentane disulphide instead of bis(diphenyl-phosphino)methane disulphide, and
b) the reaction time was 5 hours instead of 2.5 hours.

1 g of copolymer was obtained.

Example 7

A carbon monoxide/ethene copolymer was prepared substantially in the same way as the copolymer of Example 1, except for the following differences

a) the catalyst solution comprised 0.5 mmol of tetraphenyldiphosphazane disulphide instead of bis(diphenyl-phosphino)methane disulphide, and
b) the reaction time was 5 hours instead of 2.5 hours.

1 g of copolymer was obtained.

Example 8

A carbon monoxide/ethene copolymer was prepared substantially in the same way as the copolymer of Example 1, except for the following differences

a) the catalyst solution comprised 0.5 mmol of 2,2-dimethyl-1,3-bis(diphenyl-phosphino)-2-silapropane disulphide instead of bis(diphenyl-phosphino)methane disulphide, and
b) the reaction time was 5 hours instead of 2.5 hours.

3.6 g of copolymer was obtained.

Example 9

A carbon monoxide/ethene copolymer was prepared substantially in the same way as the copolymer of Example 1, except for the following differences

a) the catalyst solution comprised 0.5 mmol of bis(diphenyl-phosphino)methane diselenide instead of bis(diphenyl-phosphino)methane disulphide, and
b) the reaction temperature was 100°C instead of 80°C, and
c) the reaction time was 5 hours instead of 2.5 hours.

1 g of copolymer was obtained.

Example 10 (comparative)

Example 1 was substantially repeated, except for the following differences

a) the catalyst solution comprised 0.5 mmol of tetramethyldiphosphine disulphide instead of bis(diphenyl-phosphino)methane disulphide, and
b) the reaction time was 5 hours instead of 2.5 hours.

No polymer was formed.

Of Examples 1-10, Examples 1-9 are examples in accordance with the invention. In these examples, catalyst compositions were employed which comprised a Group VIII metal and a compound of the general formula

I.

Example 10, in which a catalyst composition was employed which comprised tetramethyldiphosphine disulphide instead of a compound of the general formula I, i.e. a compound which contained no bridging group Y, falls outside the scope of the invention.

With the aid of $^{13}C$-NMR analysis, it was established that the carbon monoxide/ethene copolymers prepared according to Examples 1-9 had a linear structure and were made up of units of the formula $-(CO)-(C_2H_4)-$.

## Claims

1. Catalyst compositions, characterized in that they comprise a Group VIII metal and a compound of the general formula I

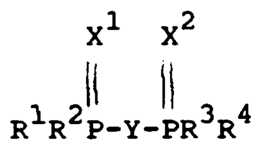

(I)

wherein $X^1$ and $X^2$ are the same or different elements chosen from sulphur and selenium, Y is a bivalent bridging group containing at least one carbon or nitrogen atom in the bridge and $R^1$, $R^2$, $R^3$ and $R^4$ are the same or different, optionally polar-substituted, hydrocarbyl groups.

2. Catalyst compositions as claimed in claim 1, characterized in that they comprise palladium as Group VIII metal.

3. Catalyst compositions as claimed in claim 1 or 2, characterized in that the Group VIII metal is incorporated therein in the form of a salt of a carboxylic acid, such as an acetate.

4. Catalyst compositions as claimed in one or more of claims 1-3, characterized in that in addition they include an anion of an acid with a pKa of less than 4.

5. Catalyst compositions as claimed in claim 4, characterized in that they include an anion of a sulphonic acid, such as para-toluenesulphonic acid or of a halogen carboxylic acid, such as trifluoroacetic acid.

6. Catalyst compositions as claimed in claim 4 or 5, characterized in that they include the anion of an acid with a pKa of less than 4 in a quantity of 1-1000 equivalents per mol of Group VIII metal.

7. Catalyst compositions as claimed in one or more of claims 1-6, characterized in that in addition they include an organic oxidant.

8. Catalyst compositions as claimed in claim 7, characterized in that they include the organic oxidant in a quantity of 1-10000 mol per mol of Group VIII metal.

9. Catalyst compositions as claimed in one or more of claims 1-8, characterized in that they include the compound of the general formula I in a quantity of 1-1000 mol per mol of Group VIII metal.

10. Catalyst compositions as claimed in one or more of claims 1-9, characterized in that in the compound of the general formula I, $X^1$ and $X^2$ represent sulphur.

11. Catalyst compositions as claimed in one or more of claims 1-10, characterized in that in the compound of the general formula I, $R^1$, $R^2$, $R^3$ and $R^4$ are phenyl groups.

12. Catalyst compositions as claimed in one or more of claims 1-11, characterized in that in the compound of the general formula I, bridging group Y contains at least two carbon atoms in the bridge.

13. Catalyst compositions as claimed in claim 12, characterized in that, as compound of the general formula I, they include a compound selected from 2,2-dimethyl-1,3-bis(diphenyl-phosphino)propane disulphide, 2,2-dimethyl-1,3-bis(diphenyl-phosphino)-2-silapropane disulphide, and 2-methyl-2-(diphenyl-phosphino-methyl)-1,3-bis(diphenyl-phosphino)propane trisulphide.

14. Process for the preparation of polymers, characterized in that a mixture of carbon monoxide with one or more olefinically unsaturated compounds is contacted at an elevated temperature and pressure with a catalyst composition as claimed in one or more of claims 1-13.

15. Process as claimed in claim 14, characterized in that it is carried out at a temperature of 25-150°C, a pressure of 2-150 bar and, in the mixture to be polymerized, a molar ratio of olefinically unsaturated compounds relative to carbon monoxide of 10 : 1-1 : 10, and in that per mol of the olefinically unsaturated compound to be polymerized, such a quantity of catalyst composition is used as to contain $10^{-7}$-$10^{-3}$ mol of Group VIII metal.

## Patentansprüche

1. Katalysatorzusammensetzungen, dadurch gekennzeichnet, daß sie ein Gruppe VIII-Metall und eine Verbindung der allgemeinen Formel I

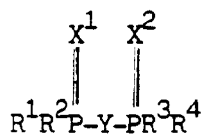

(I)

umfassen, worin $X^1$ und $X^2$ gleiche oder verschiedene, unter Schwefel und Selen ausgewählte Elemente darstellen, Y eine zweiwertige Brückengruppe, die wenigstens ein Kohlenstoff- oder Stickstoffatom in der Brücke enthält, und $R^1$, $R^2$, $R^3$ und $R^4$ gleiche oder verschiedene, gegebenenfalls durch polare Gruppen substituierte Hydrocarbylgruppen bedeuten.

2. Katalysatorzusammensetzungen nach Anspruch 1, dadurch gekennzeichnet, daß sie Palladium als Gruppe VIII-Metall enthalten.

3. Katalysatorzusammensetzungen nach Anspruch 1 oder 2, dadurch gekennzeichnet, daß das Gruppe VIII-Metall in Form eines Salzes einer Carbonsäure, wie eines Acetats, in ihnen vorliegt.

4. Katalysatorzusammensetzungen nach einem oder mehreren der Ansprüche 1 bis 3, dadurch gekennzeichnet, daß sie zusätzlich ein Anion einer Säure mit einem pKa-Wert von kleiner als 4 enthalten.

5. Katalysatorzusammensetzungen nach Anspruch 4, dadurch gekennzeichnet, daß sie ein Anion einer Sulfonsäure, wie para-Toluolsulfonsäure oder einer Halogencarbonsäure, wie Trifluoressigsäure, enthalten.

6. Katalysatorzusammensetzungen nach Anspruch 4 oder 5, dadurch gekennzeichnet, daß sie das Anion einer Säure mit einem pKa-Wert von kleiner als 4 in einer Menge von 1 bis 1.000 Äquivalenten je Mol Gruppe VIII-Metall enthalten.

7. Katalysatorzusammensetzungen nach einem oder mehreren der Ansprüche 1 bis 6, dadurch gekennzeichnet, daß sie zusätzlich ein organisches Oxidationsmittel enthalten.

8. Katalysatorzusammensetzungen nach Anspruch 7, dadurch gekennzeichnet, daß sie das organische Oxidationsmittel in einer Menge von 1 bis 10.000 Mol je Mol Gruppe VIII-Metall enthalten.

9. Katalysatorzusammensetzungen nach einem oder mehreren der Ansprüche 1 bis 8, dadurch gekennzeichnet, daß sie die Verbindung der allgemeinen Formel I in einer Menge von 1 bis 1.000 Mol je Mol Gruppe VIII-Metall enthalten.

10. Katalysatorzusammensetzungen nach einem oder mehreren der Ansprüche 1 bis 9, dadurch gekennzeichnet, daß in der Verbindung der allgemeinen Formel I die Reste $X^1$ und $X^2$ Schwefel darstellen.

11. Katalysatorzusammensetzungen nach einem oder mehreren der Ansprüche 1 bis 10, dadurch gekennzeichnet, daß in der Verbindung der allgemeinen Formel I die Reste $R^1$, $R^2$, $R^3$ und $R^4$ Phenylgruppen bedeuten.

12. Katalysatorzusammensetzungen nach einem oder mehreren der Ansprüche 1 bis 11, dadurch gekennzeichnet, daß in der Verbindung der allgemeinen Formel I die Brückengruppe Y wenigstens zwei Kohlenstoffatome in der Brücke enthält.

13. Katalysatorzusammensetzungen nach Anspruch 12, dadurch gekennzeichnet, daß sie als Verbindung der allgemeinen Formel I eine Verbindung, ausgewählt unter 2,2-Dimethyl-1,3-bis(diphenylphosphino)propandisulfid, 2,2-Dimethyl-1,3-bis(diphenylphosphino)-2-silapropandisulfid und 2-Methyl-2-(diphenylphosphinomethyl)-1,3-bis(diphenylphosphino)propantrisulfid enthalten.

14. Verfahren zur Herstellung von Polymeren, dadurch gekennzeichnet, daß ein Gemisch aus Kohlenmonoxid mit einer oder mit mehreren olefinisch ungesättigten Verbindung bei erhöhter Temperatur und erhöhtem Druck mit einer Katalysatorzusammensetzung nach einem oder mehreren der Ansprüche 1 bis 13 in Kontakt gebracht wird.

15. Verfahren nach Anspruch 14, dadurch gekennzeichnet, daß es bei einer Temperatur von 25 bis 150°C und bei einem Druck von 2 bis 150 bar ausgeführt wird und daß in dem zu polymerisierenden Gemisch ein Molverhältnis von olefinisch ungesättigten Verbindungen zu Kohlenmonoxid von 10 : 1 bis 1 : 10 eingehalten wird und daß je Mol der zu polymerisierenden olefinisch ungesättigten Verbindung eine solche Menge an Katalysatorzusammensetzungen verwendet wird, die $10^{-7}$ bis $10^{-3}$ Mol Gruppe VIII-Metall enthält.

## Revendications

1. Compositions catalytiques, caractérisées en ce qu'elles comprennent un métal du groupe VIII et un

composé de formule générale I :

$$R^1R^2\overset{\overset{X^1}{\parallel}}{P}-Y-\overset{\overset{X^2}{\parallel}}{P}R^3R^4 \qquad (I)$$

dans laquelle $X^1$ et $X^2$ représentent des éléments identiques ou différents choisis parmi le soufre et le sélénium, Y représente un groupe pontant bivalent contenant au moins un atome de carbone ou d'azote dans le pont, et $R^1$, $R^2$, $R^3$ et $R^4$ représentent des groupes hydrocarbyle identiques ou différents éventuellement substitués avec un groupe polaire.

2. Compositions catalytiques selon la revendication 1, caractérisées en ce qu'elles comprennent du palladium comme métal du groupe VIII.

3. Compositions catalytiques selon la revendication 1 ou 2, caractérisées en ce que le métal du groupe VIII est incorporé dans celles-ci sous la forme d'un sel dérivé d'un acide carboxylique, notamment un acétate.

4. Compositions catalytiques selon au moins une des revendications 1 à 3, caractérisées en ce qu'elles comprennent en outre un anion dérivé d'un acide ayant un pKa inférieur à 4.

5. Compositions catalytiques selon la revendication 4, caractérisées en ce qu'elles comprennent un anion dérivé d'un acide sulfonique, notamment l'acide para-toluènesulfonique, ou d'un acide carboxylique halogéné tel que l'acide trifluoroacétique.

6. Compositions catalytiques selon la revendication 4 ou 5, caractérisées en ce qu'elles comprennent l'anion dérivé d'un acide ayant un pKa inférieur à 4 selon une quantité de 1 à 1000 équivalents par mole de métal du groupe VIII.

7. Compositions catalytiques selon au moins une des revendications 1 à 6, caractérisées en ce qu'elles comprennent en outre un oxydant organique.

8. Compositions catalytiques selon la revendication 7, caractérisées en ce qu'elles comprennent l'oxydant organique selon une quantité de 1 à 10000 moles par mole de métal du groupe VIII.

9. Compositions catalytiques selon au moins une des revendications 1 à 8, caractérisées en ce qu'elles comprennent le composé de formule générale I selon une quantité de 1 à 1000 moles par mole de métal du groupe VIII.

10. Compositions catalytiques selon au moins une des revendications 1 à 9, caractérisées en ce que dans le composé, de formule générale I, $X^1$ et $X^2$ représentent des atomes de soufre.

11. Compositions catalytiques selon au moins une des revendications 1 à 10, caractérisées en ce que, dans le composé de formule générale I, $R^1$, $R^2$, $R^3$ et $R^4$ représentent des groupes phényle.

12. Compositions catalytiques selon au moins une des revendications 1 à 11, caractérisées en ce que, dans le composé de formule générale I, le groupe pontant Y contient au moins deux atomes de carbone dans le pont.

13. Compositions catalytiques selon la revendication 12, caractérisées en ce qu'elles comprennent, comme composé de formule générale I, un composé choisi parmi le bisulfure de 2,2-diméthyl-1,3-bis(diphényl-phosphino)propane, le bisulfure de 2,2-diméthyl-1,3-bis(diphényl-phosphino)-2-silapropane et le trisulfure de 2-méthyl-2-(diphényl-phosphino-méthyl)-1,3-bis(diphényl-phosphino)propane.

14. Procédé de préparation de polymères, caractérisé en ce qu'on met en contact un mélange de monoxyde de carbone et d'au moins un composé à insaturation oléfinique, à température et sous pression élevées, avec une composition catalytique selon au moins une des revendications 1 à 13.

15. Procédé selon la revendication 14, caractérisé en ce qu'il est effectué à une température de 25 à 150°C, sous une pression de 2 à 150 bars, le rapport molaire des composés à insaturation oléfinique au monoxyde de carbone dans le mélange destiné à être polymérisé, étant de 10 : 1 à 1 : 10, et en ce que par mole du composé à insaturation oléfinique destiné à être polymérisé, on emploie une quantité de composition catalytique telle qu'elle contient de $10^{-7}$ à $10^{-3}$ mole de métal du groupe VIII.